(19) Europäisches Patentamt
European Patent Office
Office européen des brevets

(11) Publication number: 0 095 811 A2

(12) EUROPEAN PATENT APPLICATION

(21) Application number: 83200753.8

(22) Date of filing: 26.05.83

(51) Int. Cl.³: A 01 N 47/22
//
(A01N47/22, 47/18, 47/16, 47/12)

(30) Priority: 27.05.82 US 382503

(43) Date of publication of application: 07.12.83
Bulletin 83/49

(84) Designated Contracting States: AT BE CH DE FR GB IT LI NL SE

(71) Applicant: STAUFFER CHEMICAL COMPANY, Westport Connecticut 06880 (US)

(72) Inventor: Groenwold, Bareld Egge, 2059 Kent Drive, Los Altos California 94022 (US)

(74) Representative: Urbanus, Henricus Maria, Ir. et al, c/o Vereenigde Octrooibureaux Nieuwe Parklaan 107, NL-2587 BP 's-Gravenhage (NL)

(54) **Synergistic herbicidal compositions and method of controlling undesirable vegetation by applying said composition.**

(57) Synergistic herbicide combinations comprising (a) compounds of the formula

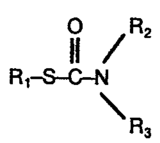

wherein $R_1$ is selected from the group consisting of lower alkyl having from 2 to 6 carbon atoms, haloalkyl, benzyl and substituted benzyl, phenethyl, pyridylmethyl, cycloalkyl having from 3 to 6 carbon atoms, and haloalkenyl having from 3 to 6 carbon atoms, and $R_2$ and $R_3$ are each independently selected from the group consisting of $C_2$–$C_6$ alkyl, $C_2$–$C_6$ alkenyl and $C_3$–$C_8$ cycloalkyl, provided further that $R_2$ and $R_3$ can join with the nitrogen to which they are attached to form a 5 to 6 carbon ring structure, and (b) an herbicidally effective amount of an anilide having the formula

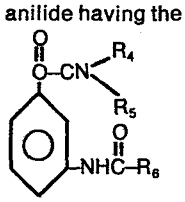

in which $R_4$ is hydrogen and lower alkyl containing from about 2 to 5 carbon atoms, $R_5$ is alkyl containing from 1 to 8 carbon atoms, cycloalkyl having from 3 to 6 carbon atoms, lower alkenyl containing from 3 to 4 carbon atoms, and $R_6$ is lower alkyl containing from 2 to 5 carbon atoms. In a typical application, the herbicide compositions are applied to the soil in either pre- or post-emergence treatment, or are applied to the seeds of the crop plant in herbicidally effective concentrations.

EP 0 095 811 A2

0095811

Synergistic herbicidal compositions and method of controlling undesirable vegetation by applying said composition.

--------

## Background of the Invention

Herbicides are widely used by farmers and commercial agricultural companies in order to increase crop yields for such staple crops as corn, soybeans, rice, and the like.

Herbicides are effective in killing or controlling unwanted weeds and grasses which compete for soil nutrients with the crop plants. Examples of various herbicidal compounds which have been used in recent years include commercially available products such as Sutan®, Ordram®, Eptam®, Knoxweed®, Ro-Neet®, Vernam®, and the like.

These herbicides are toxic to a large number of weeds when applied in varying concentrations for both pre- and post-emergence control. One particularly successful herbicide is the aforementioned Ro-Neet®, which is used for the control of weeds in pre-plant sugarbeets, spinach, and table beets, particularly. Ro-Neet® is a herbicide of the thiolcarbamate type as exemplified in U.S. Patents 3,175,897 and 3,185,720. The thiolcarbamates, used alone or admixed with other herbicides, such as triazines, are used extensively at the present time.

Occasionally, it is discovered that certain combinations of herbicides exhibit synergistic activity when used in conjunction with certain crop plants, and against certain weeds. This invention is related to a specific combination of herbicides which exhibit such synergistic activity.

As used herein, the terms "synergism" and "synergistic activity" means herbicidal activity for the combination which is greater than the herbicidal activity which would be expected for either of the herbicides used in the combination when used separately, or which definition is generally accepted by those skilled in the art.

Description of the Invention

It has now been discovered that synergistic activity is exhibited by a combination of two herbicides, one of which is of the thiolcarbamate class, and the other of which is of the anilide type.

In particular, therefore, this invention relates to a novel synergistic herbicidal composition comprising

(a) an herbicidally effective amount of a thiolcarbamate having the formula

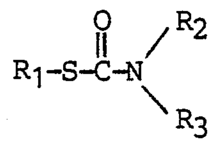

wherein

$R_1$ is selected from the group consisting of lower alkyl having from 2 to 6 carbon atoms, haloalkyl, benzyl and substituted benzyl, phenethyl, pyridylmethyl, cycloalkyl having from 3 to 6 carbon atoms, and haloalkenyl having from 3 to 6 carbon atoms, and

$R_2$ and $R_3$ are each independently selected from the group consisting of $C_2$-$C_6$ alkyl, $C_2$-$C_6$ alkenyl, and $C_3$-$C_8$ cycloalkyl, provided further that $R_2$ and $R_3$ can join with the nitrogen to which they are attached to form a 5 to 6 carbon ring structure, and

(b) an herbicidally effective amount of an anilide having the formula

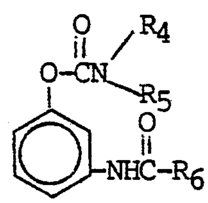

in which

$R_4$ is hydrogen and lower alkyl containing from about 2 to 5 carbon atoms,

$R_5$ is alkyl containing from 1 to 8 carbon atoms, cycloalkyl having from 3 to 6 carbon atoms, lower alkenyl containing from 3 to 4 carbon atoms, and

$R_6$ is lower alkyl containing from 2 to 5 carbon atoms.

The term "alkyl" is used herein in its normal meaning and is intended to include both straight-chain and branched-chain groups.

The term "herbicide", as used herein, means a compound or composition which controls or modifies the growth of plants. By the term "herbicidally effective amount" is meant any amount of such compound or composition which causes a modifying effect upon the growth of plants. By "plants" is meant germinant seeds, emerging seedlings and established vegetation, including roots and above-ground portions. Such controlling or modifying effects include all deviations from natural development, such as killing, retardation, defoliation, desiccation, regulation, stunting, tillering, stimulation, leaf burn, dwarfing and the like.

Within the scope of the present invention, certain embodiments are preferred, namely:

In the thiocarbamates, $R_1$ is preferably ethyl or n-propyl, $R_2$ is preferably ethyl, and $R_3$ is preferably n-butyl or cyclohexyl.

In the anilides, $R_4$ is preferably hydrogen, $R_5$ is preferably isopropyl or butyl, and $R_6$ is preferably ethyl.

This invention further relates to a method of controlling undesirable vegetation comprising applying the above composition to the locus where control is desired.

The thiolcarbamates within the scope of the present invention can be prepared by the processes described in U.S. Patent No. 2,913,327 (Tilles et al., Nov. 17, 1959), and 3,185,720 (Tilles et al., May 25, 1965).

The anilide compounds used in the synergistic combinations of the invention can be prepared in accordance with the methods described in U.S. Patent 3,836,570.

Representative thiolcarbamate compounds suitable for use as herbicides in the compositions and method of the invention include S-ethyl N,N-dipropyl thiolcarbamate, S-ethyl N,N-diisobutyl thiolcarbamate, S-propyl N,N-dipropyl thiolcarbamate, S-2,3,3-trichloroallyl N,N-diisopropyl thiolcarbamate, S-ethyl cyclohexylethyl thiolcarbamate,

S-ethyl hexadydro-1H-azepine-1-carbothioate, and n-propyl ethyl-n-butylthiolcarbamate.

Specific propionanilide compounds which have been found to be effective in the compositions of the present invention, include, for example, 3-(N-isopropylcarbamoyloxy)-propionanilide and 3-(N-butylcarbamoyloxy)-propionanilide.

Other anilide compounds which can be used in the compositions include 3-(N-sec.-butyl-carbamoyloxy)-propionanilide, 3-(N,N-di-n-propylcarbamoyloxy)-propionanilide, 3-(N-isobutylcarbamoyloxy)-propionanilide, 3-(N-tert.-butylcarbamoyloxy)-propionanilide, 3'-(N-allylcarbamoyloxy)-2-methylvaleranilide, and 3'-(N-isopropylcarbamoyloxy)-2,2-dimethylvaleranilide.

In the compositions of this invention, the (thiolcarbamate): (anilide) weight ratio lies within the following approximate limits, in order of increasing preference: 0.01:1 to 50:1; 0.05:1 to 32:1; 0.1:1 to 20:1; and 1:1 to 10:1.

The variety of crops on which the present synergistic herbicidal composition is useful can be significantly broadened by the use of an antidote to protect the crop from injury and render the composition more selective against weeds.

For antidote descriptions and methods of use, reference is made to U.S. Patent No. 3,959,304, issued to E.G. Teach on May 25, 1976; U.S. Patent No. 3,989,503, issued to F.M. Pallos et al. on November 2, 1976; U.S. Patent No. 4,021,224, issued to F.M. Pallos et al. on May 3, 1977; U.S. Patent No. 3,131,509 issued to O.L. Hoffman on May 5, 1964; and U.S. Patent No. 3,564,768, issued to O.L. Hoffman on February 3, 1971.

Examples of useful antidotes include acetamides such as N,N-diallyl-2,2-dichloroacetamide and N,N-diallyl-2-chloroacetamide, oxazolidines such as 2,2,5-trimethyl-N-dichloroacetyl oxazolidine and 2,2-spirocyclohexane-N-dichloroacetyl oxazolidine, and 1,8-naphthalic anhydride. For maximum effect, the antidote is present in the composition in a

non-phytotoxic, antidotally effective amount. By "non-phytotoxic" is meant an amount which causes at most minor injury to the crop. By "antidotally effective" is meant an amount which substantially decreases the extent of injury caused by the herbicide to the crop. The preferred weight ratio of herbicide to antidote is about 0.1:1 to about 30:1. The most preferred range for this ratio is about 3:1 to about 20:1.

Herbicidal compositions illustrative of those embodied in the instant application were prepared and evaluated for synergistic herbicidal effect. The results are shown in the following examples.

EXAMPLES

A postemergence test was performed in a simulated field as follows:

Plastic tubs measuring 10 x 7.5 x 5.75 inches (25.4 x 19.0 x 14.6 centimeters (cm)) were filled to a depth of 2 inches (5.1 cm) with 8 pounds 93.6 kilograms (kg)) of a loamy sand soil, containing 100 parts per million (ppm) of cis-N[(trichloromethyl)thio]-4-cyclohexene-1,2-carboximide (a commercial fungicide designated as Captan®) and 200 ppm of 18-18-18 fertilizer (containing 18% N, 18% $P_2O_5$, and 18% $K_2O$ on a weight basis). One pint (0.47 liter) of the soil was removed, the remaining soil was leveled and seven rows were impressed across the width of the flat. Seeds of nightshade (Solanum sp.), wild oats (Avena sativa), mustard (Brassica juncea), and wild buckwheat (Polygonum convolvulus) were planted in separate rows. The pint of soil was then used to place a 0.5 inch (1.27 cm) layer over the seeds. The planted soil was placed in a greenhouse, and irrigated by sprinkling as needed to keep the soil moist. Seven to 10 days after the original seeding, test compounds or combinations were then applied by spraying 5.0 milliliters (ml) of a stock solution of appropriate concentration onto the soil and plants to produce the desired application rate in pounds of active ingredient per acre (lb/A) or its equivalent in kilograms per hectare (kg/ha). For the particular tubs used, 5.5 milligrams (mg) of active ingredient per tub is equivalent to 1.0 lb/A. The stock solution for the propionanilide corresponding to an application rate of 1.0 lb/A therefore consisted of 22 mg of the compound dissolved in 20 ml of acetone containing 1%

polyoxyethylene sorbitan monolaurate, a commercial surfactant. The thiolcarbamate stock solution for an application rate of 1.0 lb/A was prepared by dissolving 31 mg of an emulsifiable concentrate, containing 71.3 weight percent thiolcarbamate, in 20 ml of water. Granular thiolcarbamate formulations were used in some of the tests in place of the emulsifiable concentrates, at appropriate dilutions. Stock solutions for other application rates were made by using fractions or multiples of the above. Combinations were achieved by spraying 5.0 ml from each of the appropriately selected stock solutions.

The tubs were allowed to stand for three weeks after the application of the test compounds and water was added as needed to maintain the necessary moisture. At the end of three weeks, the species were rated visually as percent control from 0 to 100%, where 0% represents no injury and 100% represents complete kill when compared to an untreated check tub. The percent control was based on the total injury to the plants due to all factors.

The results of these tests are listed in Table I in the columns headed by the symbol "O" (indicating the "observed" results). These results were then compared with the expected results, shown in the columns headed by the symbol "E", derived from Limpel's formula (Limpel et al., "Weed Control by Dimethylchloroterephthalate Alone and in Certain Combinations", PROC. NEWCC., Vol. 16, pp. 48-53 (1962):

$$E = X + Y - \frac{XY}{100}$$

wherein X = observed percent injury when one of the herbicides is used alone, and

Y = observed percent injury when the other herbicide is used alone.

A single asterisk (*) is used to indicate the tests where the results show synergism, i.e., where the observed result exceeds the expected result.

TABLE I

HERBICIDE SYNERGISM TEST RESULTS

TEST COMPOUNDS:

A :
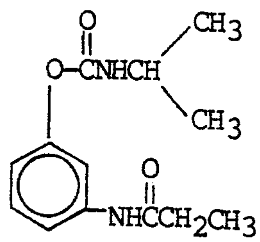

B :
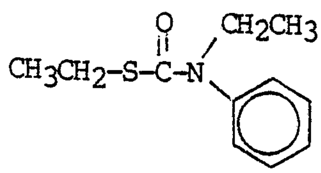

A = 3-(N-isopropylcarbamoyloxy) propionanilide

B = S-ethylcyclohexylethyl thiolcarbamate

Postemergence Application; Average of Two Replications

| Application Rates (lb/A) | | Percent Control - O = Observed E = Expected | | | | | | | | | |
|---|---|---|---|---|---|---|---|---|---|---|---|
| | | Wild Oats | | Morning-glory | | Velvet-leaf | | Mustard | | Foxtail | |
| A | B | O | E | O | E | O | E | O | E | O | E |
| **Control Data:** | | | | | | | | | | | |
| 0.5 | - | 0 | | 0 | | 0 | | 35 | | 55 | |
| 1.0 | - | 63 | | 80 | | 75 | | 78 | | 78 | |
| 1.5 | - | 60 | | 88 | | 90 | | 90 | | 70 | |
| - | 1.0 | 0 | | 0 | | 0 | | 0 | | 0 | |
| - | 2.0 | 0 | | 0 | | 0 | | 0 | | 30 | |
| - | 3.0 | 0 | | 0 | | 0 | | 0 | | 30 | |
| **Test Data:** | | | | | | | | | | | |
| 0.5 | 1.0 | 20* | 0 | 0 | 0 | 0 | 0 | 25 | 35 | 0 | 55 |
| 0.5 | 2.0 | 45* | 0 | 40* | 0 | 30* | 0 | 85* | 35 | 0 | 68 |
| 0.5 | 3.0 | 90* | 0 | 68* | 0 | 100* | 0 | 90* | 35 | 0 | 68 |
| 1.0 | 1.0 | 60 | 63 | 40 | 80 | 75 | 75 | 70 | 78 | 0 | 78 |
| 1.0 | 2.0 | 80* | 63 | 75 | 80 | 95* | 75 | 90* | 78 | 15 | 85 |
| 1.0 | 3.0 | 100* | 63 | 95* | 80 | 100* | 75 | 100* | 78 | 40 | 85 |
| 1.5 | 1.0 | 75* | 60 | 78 | 88 | 100* | 90 | 100* | 90 | 25 | 70 |
| 1.5 | 2.0 | 100* | 60 | 95* | 88 | 100* | 90 | 100* | 90 | 10 | 79 |
| 1.5 | 3.0 | 100* | 60 | 100* | 88 | 100* | 90 | 100* | 90 | 100* | 79 |

* Asterisk denotes synergistic effect shown.

Blank spaces indicate 100% control in both observed and expected results, precluding evaluation of synergism.

## METHODS OF APPLICATION

The synergistic herbicidal compositions of the present invention are useful in controlling the growth of undesirable vegetation by pre-emergence or post-emergence application to the locus where control is desired, including pre-plant, soil surface and post-emergence applications. The compositions are generally embodied in formulations suitable for convenient application. Typical formulations contain additional ingredients or diluent carriers which are either inert or active. Examples of such ingredients or carriers are water, organic solvents, dust carriers, granular carriers, surface active agents, oil and water, wateroil emulsions, wetting agents, dispersing agents, and emulsifying agents. The herbicidal formulations generally take the form of dusts, emulsifiable concentrates, granules and pellets, or microcapsules.

A. DUSTS

Dusts are dense powder compositions which are intended for application in dry form. Dusts are characterized by their free-flowing and rapid settling properties so that they are not readily windborne to areas where their presence is not desired. They contain primarily an active material and a dense, free-flowing, solid carrier.

Their performance is sometimes aided by the inclusion of a wetting agent, and convenience in manufacture frequently demands the inclusion of an inert, absorptive grinding aid. For the dust compositions of this invention, the inert carrier may be either of vegetable or mineral origin, the wetting agent is preferably anionic or nonionic, and suitable absorptive grinding aids are of mineral origin.

Suitable classes of inert solid carriers for use in the dust compositions are those organic or inorganic powders which possess high bulk density and are very free-flowing. They are also characterized by low surface area and poor liquid absorptivity. Suitable grinding aids are natural clays, diatomaceous earths, and synthetic mineral fillers derived from silica or silicate. Among ionic and nonionic wetting agents, the most suitable are the members of the group known to the art as wetting agents and emulsifiers. Although solid agents are preferred because of ease of incorporation, some liquid nonionic agents are also suitable in the dust formulations.

Preferred dust carriers are micaceous talcs, pyrophyllite, dense kaolin clays, tobacco dust and ground calcium phosphate rock.

Preferred grinding aids are attapulgite clay, diatomaceous silica, synthetic fine silica and synthetic calcium and magnesium silicates.

Most preferred wetting agents are alkylbenzene and alkyl- naphthalene sulfonates, sulfated fatty alcohols, amines or acid amides, long chain acid esters of sodium isothionate, esters of sodium sulfosuccinate, sulfated or sulfonated fatty acid esters, petroleum sulfonates, sulfonated vegetable oils, and ditertiary acetylenic glycols. Preferred dispersants are methyl cellulose, polyvinyl alcohol, lignin sulfonates, polymeric alkylnaphthalene sulfonates, sodium naphthalenesulfonate, polymethylene bisnaphthalenesulfonate, and sodium-N-methyl-N-(long chain acid) taurates.

The inert solid carriers in the dusts of this invention are usually present in concentrations of from about 30 to 90 weight percent of the total composition. The grinding aid will usually constitute 5 to 50 weight percent of the compositions, and the wetting agent will constitute from about 0 to 1.0 weight percent of the composition. Dust compositions can also contain other surfactants such as dispersing agents in concentrations of up to about 0.5 weight percent, and minor amounts of anticaking and antistatic agents. The particle size of the carrier is usually in the range of 30 to 50 microns.

B. EMULSIFIABLE CONCENTRATES

Emulsifiable concentrates are usually solutions of the active materials in nonwater-miscible solvents together with an emulsifying agent. Prior to use, the concentrate is diluted with water to form a suspended emulsion of solvent droplets.

Typical solvents for use in emulsifiable concentrates include weed oils, chlorinated hydrocarbons, and nonwater-miscible ethers, esters, and ketones.

Typical emulsifying agents are anionic or nonionic surfactants, or mixtures of the two. Examples include long-chain alkyl or mercaptan polyethoxy alcohols, alkylaryl polyethoxy alcohols, sorbitan fatty acid esters, polyoxyethylene ethers with sorbitan fatty acid esters, polyoxyethylene glycol esters with fatty or rosin acids, fatty alkylol amide condensates, calcium and amine salts of fatty alcohol sulfates, oil soluble petroleum sulfonates, or preferably mixtures of these emulsifying agents. Such emulsifying agents will comprise from about 1 to 10 weight percent of the total composition.

Thus, emulsifiable concentrates of the present invention will consist of from about 15 to about 50 weight percent active material, about 40 to 82 weight percent solvent, and about 1 to 10 weight percent emulsifier. Other additives such as spreading agents and stickers can also be included.

C. GRANULES AND PELLETS

Granules and pellets are physically stable, particulate compositions containing the active ingredients adhering to or distributed through a basic matrix of a coherent, inert carrier with macroscopic dimensions. A typical particle is about 1 to 2 millimeters in diameter. Surfactants are often present to aid in leaching of the active ingredient from the granule or pellet.

The carrier is preferably of mineral origin, and generally falls within one of two types. The first are porous, absorptive, preformed granules, such as preformed and screened granular attapulgite or heat expanded, granular, screened vermiculite. On either of these, a solution of the active agent can be sprayed and will be absorbed at concentrations up to 25 weight percent of the total weight. The second, which are also suitable for pellets, are initially powdered kaolin clays, hydrated attapulgite, or bentonite clays in the form of sodium, calcium, or magnesium bentonites. Water-soluble salts, such as sodium salts, may also be present to aid in the disintegration of granules or pellets in the presence of moisture. These ingredients are blended with the active components to give mixtures that are granulated or pelleted, followed by drying, to yield formulations with the active component distributed

uniformly throughout the mass. Such granules and pellets can also be made with 25 to 30 weight percent active component, but more frequently a concentration of about 10 weight percent is desired for optimum distribution. The granular compositions of this invention are most useful in a size range of 15-30 mesh.

The surfactant is generally a common wetting agent of anionic or nonionic character. The most suitable wetting agents depend upon the type of granule used. When preformed granules are sprayed with active material in liquid form the most suitable wetting agents are nonionic, liquid wetters miscible with the solvent. These are compounds most generally known in the art as emulsifiers, and comprise alkylaryl polyether alcohols, alkyl polyether alcohols, polyoxyethylene sorbitan fatty acid esters, polyethylene glycol esters with fatty or rosin acids, fatty alkylol amide condensates, oil solution petroleum or vegetable oil sulfonates, or mixtures of these. Such agents will usually comprise up to about 5 weight percent of the total composition.

When the active ingredient is first mixed with a powdered carrier and subsequently granulated, or pelleted, liquid nonionic wetters can still be used, but it is usually preferable to incorporate at the mixing stage one of the solid, powdered anionic wetting agents such as those previously listed for the wettable powders. Such agents will comprise from about 0 to 2 weight percent of the total composition.

Thus, the preferred granular or pelleted formulations of this invention comprise about 5 to 30 percent by weight active material, about 0 to 5 weight percent wetting agent, and about 65 to 95 weight percent inert material carrier, as these terms are used herein.

D. MICROCAPSULES

Microcapsules consist of fully enclosed droplets or granules containing the active materials, in which the enclosing material is an inert porous membrane, arranged to allow escape of the enclosed materials to the surrounding medium at controlled rates over a specified period. Encapsulated droplets are typically about 1 to 50 microns in diameter.

The enclosed liquid typically constitutes about 50 to 95% of the weight of the entire capsule, and may contain a small amount of solvent in addition to the active materials.

Encapsulated granules are characterized by porous membranes sealing the openings of the granule carrier pores, trapping the liquid containing the active components inside for controlled release. A typical granule size ranges from 1 millimeter to 1 centimeter in diameter. In agricultural usage, the granule size is generally about 1 to 2 millimeters in diameter. Granules formed by extrusion, agglomeration, or prilling are useful in the present invention as well as materials in their naturally occurring form. Examples of such carriers are vermiculite, sintered clay granules, kaolin, attapulgite clay, sawdust, and granular carbon.

Useful encapsulating materials include natural and synthetic rubbers, cellulosic materials, styrene-butadiene copolymers, polyacrylonitriles, polyacrylates, polyesters, polyamides, polyurethanes, and starch xanthates.

E. IN GENERAL

Each of the above formulations can be prepared as a package containing the herbicide composition together with the other ingredients of the formulation (diluents, emulsifiers, surfactants, etc.). The formulations can also be prepared by a tank mix method, in which the ingredients are obtained separately and combined at the grower site..

In general, any conventional method of application can be used. The locus of application can be soil, seeds, seedlings, or the actual plants, as well as flooded fields. Soil application is preferred. Dusts and liquid compositions can be applied by the use of powder dusters, boom and hand sprayers, and spray dusters. The compositions can also be applied from airplanes as dusts and sprays because they are effective in very low dosages. In order to modify or control the growth of germinating seeds or emerging seedlings, as a typical example, the dust and liquid compositions are applied to the soil according to conventional methods and are distributed in the soil to a depth of at least one-half

inch below the soil surface. It is not necessary that the phytotoxic compositions be admixed with the soil particles. Instead, these compositions can be applied merely by spraying or sprinkling the surface of the soil. The phytotoxic compositions of this invention can also be applied by addition to irrigation water supplied to the field to be treated. This method of application permits the penetration of the compositions into the soil as the water is absorbed therein. Dust compositions, granular compositions or liquid formulations applied to the surface of the soil can be distributed below the surface of the soil by conventional means such as discing, dragging or mixing operations.

The synergistic herbicide compositions can also be applied to the soil through irrigation systems. According to this technique, the compositions are added directly to irrigation water immediately prior to irrigation of the field. This technique is applicable in all geographical areas regardless of rainfall, since it permits supplementation of the natural rainfall at critical stages of plant growth. In a typical application, the concentration of the herbicide composition in the irrigation water will range from about 10 to 150 parts per million by weight. The irrigation water can be applied by the use of sprinkler systems, surface furrows, or flooding. Such application is most effectively done before the weeds germinate, either early in the spring prior to germination or within two days after cultivation of the field.

The amount of the present composition which constitutes a herbicidally effective amount depends upon the nature of the seeds or plants to be controlled. The rate of application of active ingredient varies from about 0.01 to about 50 pounds per acre, preferably about 0.1 to about 25 pounds per acre with the actual amount depending on the overall cost and the desired results. It will be readily apparent to one skilled in the art that compositions exhibiting lower herbicidal activity will require a higher dosage than more active compounds for the same degree of control.

- CLAIMS -

1. A synergistic herbicidal composition comprising

(a) an herbicidally effective amount of a thiolcarbamate having the formula

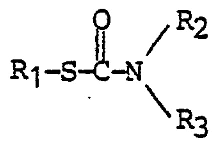

wherein

$R_1$ is selected from the group consisting of lower alkyl having from 2 to 6 carbon atoms, haloalkyl, benzyl and substituted benzyl, phenethyl, pyridylmethyl, cycloalkyl having from 3 to 6 carbon atoms, and haloalkenyl having from 3 to 6 carbon atoms, and

$R_2$ and $R_3$ are each independently selected from the group consisting of $C_2$-$C_6$ alkyl, $C_2$-$C_6$ alkenyl, and $C_3$-$C_8$ cycloalkyl, provided further that $R_2$ and $R_3$ can join with the nitrogen to which they are attached to form a 5 to 6 carbon ring structure, and

(b) an herbicidally effective amount of an anilide having the formula

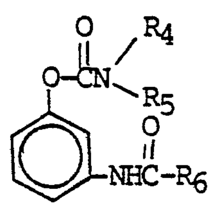

in which

$R_4$ is hydrogen and lower alkyl containing from about 2 to 5 carbon atoms,

$R_5$ is alkyl containing from 1 to 8 carbon atoms, cycloalkyl having from 3 to 6 carbon atoms, lower alkenyl containing from 3 to 4 carbon atoms, and

$R_6$ is lower alkyl containing from 2 to 5 carbon atoms.

2. The composition of Claim 1 in which $R_1$ is ethyl or n-propyl, $R_2$ is ethyl, and $R_3$ is n-butyl or cyclohexyl.

3. The composition of Claim 1 in which $R_1$ is ethyl, and $R_2$, and $R_3$ are each propyl.

4. The composition of Claim 1 in which $R_4$ is hydrogen, $R_5$ is isopropyl, and $R_6$ is ethyl.

5. The composition of Claim 1 in which $R_4$ is hydrogen, $R_5$ is butyl and $R_6$ is ethyl.

6. The composition of Claim 1 in which (a) is S-ethyl cyclohexylethyl thiolcarbamate and (b) is 3-(N-isopropylcarbamoyloxy)-propionanilide.

7. The composition of Claim 1 in which (a) is S-ethyl N,N-di-N-propylthiolcarbamate and (b) is 3-(N-isopropylcarbamyloxy) propionanilide.

8. A method of controlling undesirable vegetation which comprises applying to the locus where control is desired a herbicidally effective amount of a synergistic composition comprising a mixture of

(a) an herbicidally effective amount of a thiolcarbamate having the formula

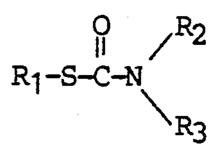

wherein

$R_1$ is selected from the group consisting of lower alkyl having from 2 to 6 carbon atoms, haloalkyl, benzyl and substituted benzyl, phenethyl, pyridylmethyl, cycloalkyl having from 3 to 6 carbon atoms, and haloalkenyl having from 3 to 6 carbon atoms, and

$R_2$ and $R_3$ are each independently selected from the group consisting of $C_2$-$C_6$ alkyl, $C_2$-$C_6$ alkenyl, and $C_3$-$C_8$ cycloalkyl, provided further that $R_2$ and $R_3$ can join with the nitrogen to which they are attached to form a 5 to 6 carbon ring structure, and

(b) an herbicidally effective amount of an anilide having the formula

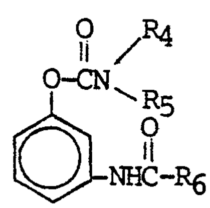

in which

$R_4$ is hydrogen and lower alkyl containing from about 2 to 5 carbon atoms,

$R_5$ is alkyl containing from 1 to 8 carbon atoms, cycloalkyl having from 3 to 6 carbon atoms, lower alkenyl containing from 3 to 4 carbon atoms, and

$R_6$ is lower alkyl containing from 2 to 5 carbon atoms.

9. The method of Claim 8 in which $R_1$ is ethyl or n-propyl, $R_2$ is ethyl, and $R_3$ is n-butyl or cyclohexyl.

10. The method of Claim 8 in which $R_1$ is ethyl, and $R_2$ and $R_3$ are each propyl.

11. The method of Claim 8 in which $R_4$ is hydrogen, $R_5$ is isopropyl, and $R_6$ is ethyl.

12. The method of Claim 8 in which $R_4$ is hydrogen, $R_5$ is butyl and $R_6$ is ethyl.

13. The method of Claim 8 in which (a) is S-ethyl cyclohexylethyl thiolcarbamate and (b) is 3-(N-isopropylcarbamoyloxy)-propionanilide.

14. The method of Claim 8 in which (a) is S-ethyl N,N-di-N-propylthiolcarbamate and (b) is 3-(N-isopropylcarbamyloxy) propionanilide.